# EUROPEAN PATENT SPECIFICATION

(11) **EP 3 928 633 B1**
(45) Date of publication and mention of the grant of the patent: **06.05.2026**
(21) Application number: 20198951.4
(22) Date of filing: 29.09.2020
(51) Int. Cl.: A23K 10/12, A23K 10/14, A23K 10/16, A23K 20/105, A23K 20/147, A23K 20/158, A23K 20/163, A23K 20/24, A23K 20/26, A23K 50/30, A23K 50/60

(54) **PREPARATION METHOD OF BIO-FERMENTED LIQUID FEED, BIO-FERMENTED LIQUID FEED AND BIO-FERMENTED EMULSION LIQUID FEED**
HERSTELLUNGSVERFAHREN FÜR BIOFERMENTIERTES FLÜSSIGFUTTER, BIOFERMENTIERTES FLÜSSIGFUTTER UND FLÜSSIGFUTTER AUS BIOFERMENTIERTER EMULSION
PROCÉDÉ DE PRÉPARATION D'ALIMENTS LIQUIDES BIO-FERMENTÉS, ALIMENTS LIQUIDES BIO-FERMENTÉS ET ALIMENTS LIQUIDES BIO-FERMENTÉS SOUS FORME D'ÉMULSION

(30) Priority: 24.06.2020 CN 202010590206
(43) Date of publication of application: 29.12.2021
(73) Proprietor: Tangrenshen Group Co., Ltd., Zhuzhou, Hunan 412002 (CN)
(72) Inventor: WANG, Xiaoming, Zhuzhou, Hunan 412002 (CN); DENG, Dun, Zhuzhou, Hunan 412002 (CN); SHU, Jiancheng, Zhuzhou, Hunan 412002 (CN); TANG, Xiangshan, Zhuzhou, Hunan 412002 (CN); LUO, Jie, Zhuzhou, Hunan 412002 (CN)
(74) Representative: Schneiders & Behrendt Bochum

(56) References cited:
- CN-A- 102 845 645
- CN-A- 105 746 918
- CN-A- 108 041 310
- CN-A- 111 296 659

## Description

### CROSS REFERENCE TO RELATED APPLICATION

This application claims the priority of Chinese Patent Application No. 202010590206.X, entitled "Preparation method of bio-fermented liquid feed, bio-fermented liquid feed and bio-fermented emulsion liquid feed" filed with China National Intellectual Property Administration on June 24, 2020.

### TECHNICAL FIELD

The application relates to the technical field of feed preparation, in particular to a preparation method of bio-fermented liquid feed, bio-fermented liquid feed and bio-fermented emulsion liquid feed.

### BACKGROUND ART

In order to improve the production efficiency of sows and the utilization rate of shed, most pig farms now adopt early weaning of piglets in the production technology. However, after early weaning, affected by changes in nutrition, physiology, psychology, environment and many other factors, piglets often suffer from weaning stress syndrome, such as no feeding or low feed intake, diarrhea, low immunity and susceptibility to illness.

After weaning, the feed intake of piglets will inevitably decrease due to the sudden change of food from liquid breast milk to solid feed. The dry matter content of breast milk is only 20%, and these dry matter are composed of lactose, cream and lactoprotein, which are highly digestible. Most of the creep feed contain a lot of starch and plant protein, which are uneasy to digest. Newly weaned piglets have problems of insufficient gastric acid secretion, low digestive enzyme content and activity, incomplete immune system development and disordered intestinal microecosystem. Weaning stress problem can not be effectively solved.

CN 108 041 310 A provides a method for preparing a liquid feed for weaned piglets with balanced nutrition, high digestibility, good palatability, and low addition of antibiotics and zinc oxide. However, the feed is added a small amount of antibiotics, and the liquid feed provided by this patent stratifies in a short time during storage, which is not conducive to commercial promotion. CN 111 296 659 A provides a fermented feed for weaned piglets; however, the fermented feed was prepared by solid state fermentation. Due to its significant difference in texture from breast milk, the feed intake of weaned piglets may decrease to a certain extent. CN 102 845 645 A discloses a method for preparing a soluble and digestible feed for young livestock and poultry, but it also includes drugs in the feed, and no animal experiments have been conducted to verify the effect of the feed. CN 105 746 918 A provides a nursing feed for weak piglets, but the patent only records the raw material components of the feed, and does not disclose the method of preparation and animal experiment effect.

### SUMMARY OF THE APPLICATION

The purpose of the present application is achieved by the technical solution according to the claims. The preparation method of bio-fermented liquid feed, bio-fermented liquid feed and bio-fermented emulsion liquid feed provided in the present application may overcome the physiological problems of weaned piglets, such as insufficient gastric acid secretion, low digestive enzyme content and activity, incomplete immune system development and disordered intestinal microecosystem. The bio-fermented liquid feed provided by the present application has advantages of good palatability, high nutrition, easy digestion, low acidity and similarity to breast milk, the emulsion liquid feed provided by the present invention may ensure that no stratification will occur within 30 days, and only slight stratification will occur within 30 to 90 days. The bio-fermented liquid feed and the bio-fermented emulsion liquid feed may both effectively alleviate the weaning stress syndrome of piglets, and realize the perfect transition from breast milk to conventional solid feed.

The application provides a preparation method of bio-fermented liquid feed, including the following steps:
1) mixing corn, broken rice, barley and wheat in a weight ratio of 1: (0-5): (0-5): (0-5) to obtain a first substrate of enzymolysis;
2) mixing the first substrate of enzymolysis obtained in step 1) with water, adding α-amylase according to the ratio of 10-500 U per gram of the first substrate of enzymolysis, and raising the temperature to 70-100 °C for liquefaction enzymatic hydrolysis for 30-120min to obtain a first enzymolysis slurry A;
3) adjusting the temperature of the first enzymolysis slurry A obtained in step 2) to 40-80 °C, adding β-amylase according to the ratio of 100-2000 U per gram of the first substrate of enzymolysis, adding pullulanase according to the ratio of 0.1-100 ASPU per gram of the first substrate of enzymolysis, adding glucoamylase according to the ratio of 0-1000 U per gram of the first substrate of enzymolysis, adding xylanase according to the ratio of 15-1000 U per gram of the first substrate of enzymolysis, adding β-glucanase according to the ratio of 5-1000 U per gram of the first substrate of enzymolysis, and enzymolyzing for 0-72h to obtain a second enzymolysis slurry A;
4) adjusting the temperature of the second enzymolysis slurry A obtained in step 3) to 25-40 °C, adding *Lactobacillus* according to the ratio of 1×10⁵-1×10⁸ cfu per gram of the first substrate of enzymolysis, adding neutral protease according to the ratio of 1-1000 U per gram of the first substrate of enzymolysis, adding acid protease according to the ratio of 1-1000 U per gram of the first substrate of enzymolysis, and performing anaerobic fermentation for 10-72h to obtain a component A;
5) mixing and sterilizing the soybean meal and water, adjusting the temperature to 40-70 °C, adjusting the pH to 7-10, adding alkaline protease according to the ratio of 1-10000U per gram of soybean meal, enzymolyzing for 0.5-6h, then adjusting the pH to 6-8, adding neutral protease according to the ratio of 1-1000 U per gram of soybean meal, and enzymolyzing for 0.5-6 hours to obtain a first enzymolysis slurry B;
6) adjusting the temperature of the first enzymolysis slurry B obtained in step 5) to 25-40 °C, adding *Lactobacillus* according to the ratio of 1×10⁵-1×10⁸ cfu per gram of soybean meal, and adding acid protease according to the ratio of 1-1000 U per gram of soybean meal, performing anaerobic fermentation for 10-72h to obtain a component B;
7) mixing the component A obtained in step 4) and the component B obtained in step 6) with a base material to obtain a bio-fermented liquid feed; the base material includes the following components by mass percentage: 0-20% quick-breaking soybeans or puffed soybeans, 1-10% fish meal, 0-10% intestinal membrane protein powder, 1-10% yeast extract, 0-10% chocolate powder, 1-50% whey powder, 1-50% whole milk powder, 0-10% glucose, 1-20% sucrose, 0.1-5% calcium hydrogen phosphate, 0.1-5% calcium formate, 0.1-10% fat powder and 2-10% premix feed;

The step 1) and the step 5) are not limited in time sequence.

In an embodiment, the corn, broken rice, barley and wheat in step 1) and the soybean meal in step 5) are crushed before being mixed with water.

In an embodiment, in step 1), the weight ratio for mixing the first substrate of enzymolysis and water is 1: (1-10).

In an embodiment, the weight ratio for mixing the soybean meal and water in step 5) is 1: (1-20).

In an embodiment, in step 7), the weight ratio for mixing component A, component B and base material is 100: (10-1000): (10-100).

The application also provides a bio-fermented liquid feed prepared by the preparation method described in the above technical solution.

The present application also provides a bio-fermented emulsion liquid feed based on the preparation method described in the above technical solution or the bio-fermented liquid feed described in the above technical solution. The preparation method of the bio-fermented emulsion liquid feed includes the following steps:
Grinding, emulsifying and homogenizing the bio-fermented liquid feed to obtain the bio-fermented emulsion liquid feed.

In an embodiment, the particle size of the bio-fermented emulsion liquid feed is 0.01-1000 µm.

The application provides a preparation method of bio-fermented liquid feed. The application realizes polysaccharification of starch, protein peptideization, and microemulsification of fat by processing the raw materials of the bio-fermented liquid feed with enzymatic hydrolysis technology and bio-fermented technology, thus eliminating the antigen in the feed and turning the macromolecular nutrients into abundant micromolecule nutrients, and characterizing in balanced nutrition, good palatability, easy digestion and fast absorption and the like. The bio-fermented liquid feed obtained by the preparation method of the present application has the following advantages compared with the liquid feed made mainly of milk powder and added with water: (1) The feed formulation composition is similar to the conventional solid feed formulation composition, which makes it an easy transition to conventional feed and realize the perfect transition from breast milk to conventional solid feed; (2) After the feed is fermented, a large number of probiotics, organic acids, antibacterial peptides and unknown growth-promoting factors and the like are produced, which may regulate the balance of the flora in the animal's intestines and help weaned piglets to establish a stable ecosystem dominated by probiotics; (3) Low cost and higher economic benefits.

### BRIEF DESCRIPTION OF THE DRAWINGS

FIG 1 is a picture of the piglet consuming bio-fermented liquid feed provided by the present application and conventional solid creep feed;
FIG 2 is a picture of the piglet eating bio-fermented liquid feed provided by the present application and conventional solid creep feed;
FIG 3 is a picture of the piglet's consumption of bio-fermented liquid feed provided by the present application and conventional solid creep feed.

### DETAILED DESCRIPTION OF THE EMBODIMENTS

Corn, broken rice, barley and wheat are mixed in the present application in a weight ratio of 1: (0-5): (0-5): (0-5) to obtain the first substrate of enzymolysis. The corn, broken rice, barley, and wheat of the present application are preferably de-impurized before use. In the present application, the corn, broken rice, barley and wheat are preferably crushed before being mixed with water, and the particle size after crushing is preferably ≤ 1500 µm. In the present application, the weight ratio of corn, broken rice, barley and wheat is more preferably 1: (0.2-3): (0-2): (0-2). In the present application, the weight ratio for mixing the first substrate of enzymolysis and water is preferably 1: (1-10), more preferably 1: (1.5-5).

After obtaining the first substrate of enzymolysis, in the present application, the first substrate of enzymolysis are mixed with water, α-amylase is added according to the ratio of 10-500U per gram of the first substrate of enzymolysis, and the temperature is raised to 70-100 °C for liquefaction enzymatic hydrolysis for 10-120min to obtain a first enzymolysis slurry A. In the present application, the order of adding water and α-amylase is not limited, either water and α-amylase can be added first. In the present application, it is more preferable to add 10 to 500 U of α-amylase per gram of the first substrate of enzymolysis. In the present application, the temperature is raised to 70-100 °C for 30-120min of liquefaction enzymatic hydrolysis. By using α-amylase for liquefaction enzymatic hydrolysis, not only may the starch be enzymolyzed into dextrin, which improves the digestibility and palatability, but also the sterilization of the raw materials is completed, which is beneficial to the next step of probiotic fermentation.

After obtaining the first enzyme hydrolysis slurry A, in the present application, the temperature of the first enzymolysis slurry A is adjusted to 40-80 °C, β-amylase is added according to the ratio of 100-2000 U per gram of the first substrate of enzymolysis, pullulanase is added according to the ratio of 0.1-100 ASPU per gram of the first substrate of enzymolysis, glucoamylase is added according to the ratio of 0-1000 U per gram of the first substrate of enzymolysis, xylanase is added according to the ratio of 15-1000 U per gram of the first substrate of enzymolysis, β-glucanase is added according to the ratio of 5-1000 U per gram of the first substrate of enzymolysis, and the obtained mixture is enzymolyzed for 0-72h to obtain a second enzymolysis slurry A. In the present application, the added amount of the β-amylase is more preferably 0-500 U/g substrate of enzymolysis; the added amount of the pullulanase is more preferably 0-20 ASPU/g substrate of enzymolysis; the added amount of the xylanase is more preferably ≤ 100 U/g substrate of enzymolysis; the added amount of β-glucanase is more preferably ≤ 100 U/g substrate of enzymolysis. Through the above enzymatic hydrolysis process, the β-amylase, pullulanase and glucoamylase may greatly increase the content of maltose and glucose in the enzymatic hydrolysis solution, thereby further improving the digestibility and palatability of the enzymatic hydrolysis solution; xylanase and β-glucanase may reduce the content of non-starch polysaccharides in the substrate of enzymolysis and improve the digestion of the substrate of enzymolysis rate once again. There is no limitation on the addition sequence of β-amylase, pullulanase, glucoamylase, xylanase and β-glucanase in the present application.

After obtaining the second enzymolysis slurry A, in the present application, the temperature of the second enzymolysis slurry A is adjusted to 25-40 °C, *Lactobacillus* is added according to the ratio of 1×10⁵-1×10⁸ cfu per gram of the first substrate of enzymolysis, neutral protease is added according to the ratio of 1-1000 U per gram of the first substrate of enzymolysis, acid protease is added according to the ratio of 1-1000 U per gram of the first substrate of enzymolysis, and anaerobic fermentation is performed for 10-72h to obtain a component A. In the present application, the temperature is more preferably 35 to 38°C. In the present application, the added amount of the *Lactobacillus* is more preferably 1×10⁶ to 1×10⁷ cfu/g substrate of enzymolysis. In the present application, the added amount of the neutral protease is more preferably 5-100 U/g of the substrate of enzymolysis, and the added amount of the acid protease is more preferably 10-500 U/g of the substrate of enzymolysis. Using neutral protease and acid protease for enzymatic hydrolysis may enzymolyze large molecules into small peptides, and *Lactobacillus* fermenting may produce a large number of *Lactobacillus* and their metabolites (lactic acid, nisin, phenyllactic acid, etc.), which may reduce the pH value of feed, and improve its palatability and digestibility.

In the present application, the soybean meal and water are mixed and sterilized, the temperature is adjusted to 40-70 °C, the pH is adjusted to 7-10, alkaline protease is added according to the ratio of 1-10000U per gram of soybean meal, enzymolyzing for 0.5-6h, then the pH adjusted to 6-8, neutral protease is added according to the ratio of 1-1000 U per gram of soybean meal, and the obtained mixture is enzymolyzed for 0.5-6 hours to obtain a first enzymolysis slurry B. In the present application, the soybean meal is preferably de-impurized before use. In the present application, the soybean meal is preferably crushed before being mixed with water. In the present application, the weight ratio for mixing the soybean meal and water is preferably 1: (1-20), more preferably 1: (3-15). The sterilization method of the present application is preferably pasteurization, and more preferably, the temperature of sterilization is 60-100 °C and the time is 5-30 min. The temperature of enzymatic hydrolysis in the present application is more preferably 50-65 °C. In the present application, the pH is more preferably 8-9.5 during enzymatic hydrolysis of the alkaline protease. In the present application, the added amount of the alkaline protease is more preferably 50-1000 U/g soybean meal; the added amount of the neutral protease is more preferably 5-500 U/g soybean meal. In the present application, the alkaline protease enzymatic hydrolysis time of alkaline protease is more preferably 0.5-4 hours, and the enzymatic hydrolysis time of neutral protease is more preferably 0.5-4 hours. Macromolecular proteins in soybean meal can be converted into small peptides which can be easily digested and absorbed by complex enzymolysis of alkaline protease and neutral protease.

After obtaining the first enzymolysis slurry B, in the present application, the temperature of the first enzymolysis slurry B is adjusted to 25-40 °C, *Lactobacillus* is added according to the ratio of 1×10⁵-1×10⁸ cfu per gram of soybean meal, and acid protease is added according to the ratio of 1-1000 U per gram of soybean meal, anaerobic fermentation is performed for 10-72h to obtain a component B. In the present application, the temperature is more preferably 35-38 °C. In the present application, the added amount of the *Lactobacillus* is more preferably 1×10⁶-1×10⁷ cfu/g soybean meal, and the added amount of the acid amylase is more preferably 20-1000 U/g soybean meal. In the present application, the time for performing anaerobic fermentation is more preferably 20-48 hours. The yield of soybean peptides can be further improved by *Lactobacillus* fermentation and acid protease enzymatic hydrolysis, meanwhile a large number of *Lactobacillus* and their metabolites can be produced through fermentation, and also, the fermentation of *Lactobacillus* can eliminate both raffinose and stachyose (anti-nutritional factors) in soybean meal and most of the bitter substances produced in the process of enzymatic hydrolysis of soybean meal.

After obtaining component A and component B, in the present application, the component A and the component B are mixed with a base material to obtain a bio-fermented liquid feed; the base material includes the following components by mass percentage: 0-20% quick-breaking soybeans or puffed soybeans, 1-10% fish meal, 0-10% intestinal membrane protein powder, 1-10% yeast extract, 0-10% chocolate powder, 1-50% whey powder, 1-50% whole milk powder, 0-10% glucose, 1-20% sucrose, 0.1-5% calcium hydrogen phosphate, 0.1-5% calcium formate, 0.1-10% fat powder and 2-10% premix feed. There is no specific limitation on the source of the premix feed in the present application, and the corresponding conventional commercial premix feed selected according to the growth stage of the piglets will do. In the present application, the weight ratio for mixing the component A, the component B and the base material is preferably 100: (10-1000): (10-100).

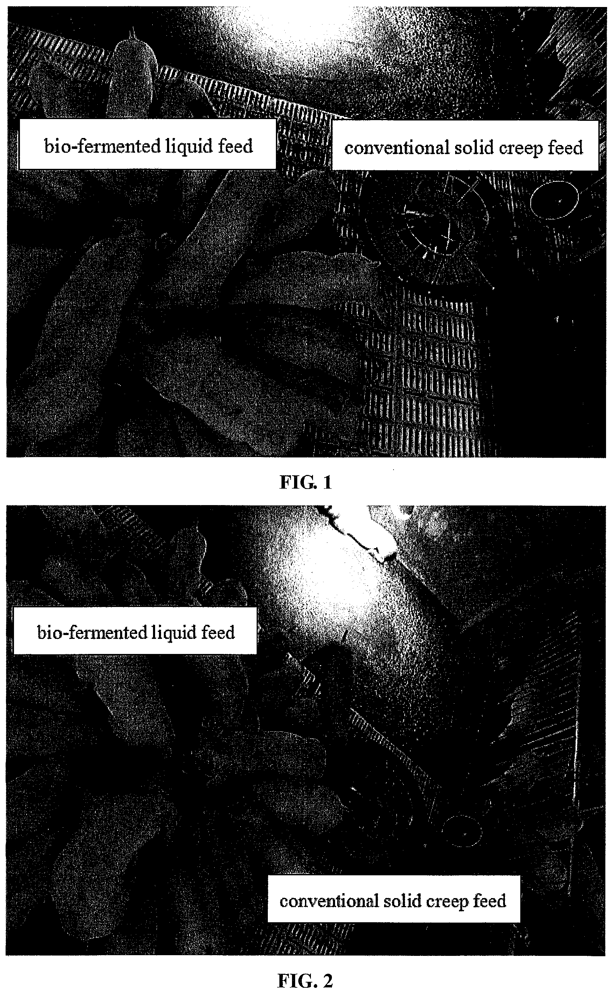

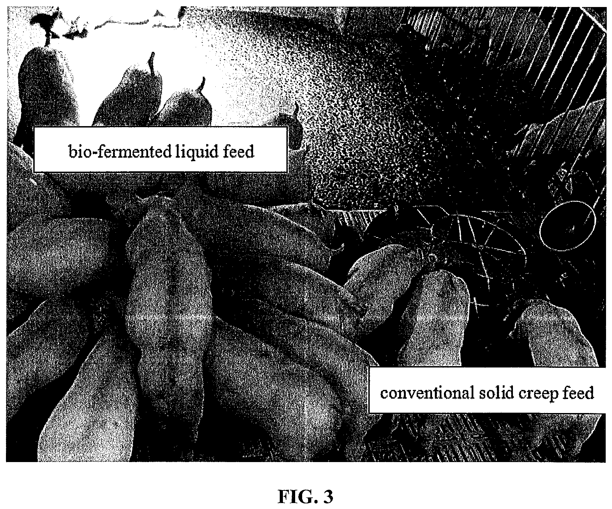

The preparation method of the present application combines enzymatic hydrolysis technology, bio-fermented technology and the like, changes macromolecular nutrients into abundant micromolecule nutrients. The bio-fermented liquid feed obtained has the characteristics of balanced nutrition and good palatability (as shown in FIG 1, FIG 2 and FIG 3, wherein the left sides of FIGs. 1 to 3 show the situation of piglets consuming the bio-fermented liquid feed of the present application, and the right sides are the situation of consuming conventional solid creep feed), easy digestion, fast absorption, high stability and the like. It can not only effectively relieve the weaning stress syndrome of piglets, but also realize the perfect transition from breast milk to conventional solid feed.

The application also provides a bio-fermented liquid feed prepared by the preparation method described in the above technical scheme. The bio-fermented liquid feed of the present application can be directly fed to piglets (suitable for being prepared and used in farms, and the problem of stratification will occur after being placed for more than 3 days), and can also be prepared into bio-fermented emulsion liquid feed to feed piglets.

The present application also provides an bio-fermented emulsion liquid feed based on the preparation method or the bio-fermented liquid feed of the above technical scheme, and the preparation method of the bio-fermented emulsion liquid feed includes the following steps:
Grinding, emulsifying and homogenizing the bio-fermented liquid feed to obtain the bio-fermented emulsion liquid feed. There is no specific limitation in the present application on the methods of grinding, emulsification and homogenization, and a conventional colloid mill for grinding, an emulsification pump for emulsification, and a homogenizer for homogenization will do. In the present application, the particle size of the bio-fermented emulsion liquid feed is preferably 0.01-1000 µm, more preferably 0.01-150 µm.

The grinding, homogenization and emulsification process are introduced into the present application. After the liquid feed is ground, emulsified and homogenized, the particle size of the liquid feed is greatly reduced, the palatability and digestibility of the liquid feed are effectively improved, and the problem of stratification when conventional liquid feed is placed for a long time is resolved. The emulsion liquid feed may ensure that there will be no stratification within 30 days, and only slight stratification will occur within 30 to 90 days.

The emulsion bio-fermented liquid feed of the present application has the characteristics of good palatability, good stability, and no stratification after being placed for a long time.

The preparation method of bio-fermented liquid feed, bio-fermented liquid feed and bio-fermented emulsion liquid feed of the present application will be described in further detail below with specific examples. The technical solution of the present application includes but is not limited to the following examples.

### Example 1

300 kg of corn and 100 kg of broken rice were de-impurized and crushed, and then mixed evenly to prepare substrate of enzymolysis. α-amylase was added into substrate of enzymolysis at 30 U/g, and then 1500 kg of water was added, mixed evenly to prepare enzymolysis slurry, which was raised to 75-80 °C for liquefaction enzymolysis for 90 min. Then, the temperature of enzymolysis slurry was adjusted to 50-55 °C, and β-amylase was added into substrate of enzymolysis at 100 U/g, and pullulanase was added into substrate of enzymolysis at 0.1 ASPU/g, and the enzymolysis was carried out for 6 hours with heat preservation. Then, the temperature of enzymolysis slurry was adjusted to 35-38 °C, *Lactobacillus* was added into substrate of enzymolysis at 1×10⁶ CFU/g, neutral protease was added into substrate of enzymolysis at 20 U/g, and acid protease was added into substrate of enzymolysis at 30 U/g, and then anaerobic fermentation was carried out for 28 h under heat preservation, thus obtaining the component A.

100 kg of soybean meal was de-impurized and crushed, 1000 kg of water was added and mixed evenly, and then the temperature was raised to 70-75 °C, and the temperature was kept for 20min for sterilization. Then, the temperature of the sterilized soybean meal solution was adjusted to 50-55 °C, the pH was adjusted to 8.0-8.5 before the alkaline protease was added into soybean meal at 100 U/g, the temperature was kept for 2 hours for enzymolysis, and then the pH was adjusted to 7-7.5, neutral protease was added into soybean meal at 50 U/g, and mixed evenly to prepare enzymatic hydrolysis solution, and the temperature was kept for enzymolysis for 2h. The temperature of the enzymolysis slurry was adjusted to 35-38 °C, *Lactobacillus* was added into substrate of enzymolysis at 3×10⁶ CFU/g, acid protease was added into substrate of enzymolysis at 80 U/g, and then anaerobic fermentation was carried out for 36 h under heat preservation, thus obtaining the component B.

1900 kg of component A, 1100 kg of component B and 500 kg of base material were mixed evenly to obtain bio-fermented liquid feed (complete bio-fermented liquid feed), wherein 500 kg of base material was obtained by evenly mixing the following raw materials: 16% puffed soybeans, 6% fish meal, 4% yeast extract, 21% whey powder, 30% whole milk powder, 10% sucrose, 1.4% calcium hydrogen phosphate, 1% calcium formate, 4.6% fat powder and 6% premix feed.

The complete bio-fermented liquid feed was ground by colloid mill, then emulsified by emulsifying pump, finally homogenized by homogenizer to obtain a bio-fermented emulsion liquid feed with a particle size of 0. 1-100 µm.

### Animal experiment:

100 weaned piglets aged 21 days were randomly divided into 2 treatment groups according to the principle of similar weight and the same sex, with 5 replicates in each treatment and 10 piglets in each replicate. Two kinds of experimental diets were fed separately: experimental feed A (control group, solid creep feed), experimental feed B (experimental group, bio-fermented emulsion liquid feed). During the experiment period, a dedicated person was arranged to in charge of the feeding, piglets were kept in a naturally ventilated environment and free to eat and drink, and the shed was kept clean and sanitary. During the experiment period, if the piglets were found sick, they were treated in time, if could not recover within 3 days, they were eliminated. A 7-day experiment was carried out (21 days old to 28 days old) and the results were shown in Table 1.

**Table 1 Animal Experiment Results**

| Items | Control group (solid creep feed) | experimental group (emulsion bio-fermented liquid feed) |
|---|---|---|
| Average initial weight/kg | 6.09 | 5.87 |
| Average final weight/kg | 7.01 | 7.20 |
| Average daily gain(g/day•head) | 131.43 | 189.71 |
| Average daily feed | 161.79 | 249.73 |
| Intake(g/day•head) | | |
| Feed conversion ratio | 1.23 | 1.32 |
| Diarrhea rate/% | 6.18 | 3.27 |
| Survival rate/% | 96.00 | 100.00 |

| | | |
|---|---|---|
| Note: (1) when calculating the average daily feed intake, the weight of liquid material has been converted into the weight of solid material. | | |

The results show that the average daily gain, average daily feed intake and survival rate of piglets fed with bio-fermented emulsion liquid feed are significantly higher than those of the control group, and the diarrhea rate is significantly lower than that of the control group. The feed conversion ratio of the experimental group is slightly higher than that of the control group, which is due to the fact that there is no special tank for liquid feed when feeding liquid feed, which results in a higher feed conversion ratio.

### Example 2

200 kg of corn, 100 kg of broken rice and 100 kg of wheat were de-impurized and crushed, and then mixed evenly to prepare substrate of enzymolysis. α-amylase was added into substrate of enzymolysis at 50 U/g, and then 1200 kg of water was added, and mixed evenly to prepare enzymolysis slurry, which was raised to 90-95 °C for liquefaction enzymolysis for 30 min. Then, the temperature of enzymolysis slurry was adjusted to 55-60 °C, β-amylase was added into substrate of enzymolysis at 300 U/g, pullulanase was added into substrate of enzymolysis at 0.3 ASPU/g, xylanase was added into substrate of enzymolysis at 15 U/g, β-glucanase was added into substrate of enzymolysis at 5 U/g, and the temperature was keep for enzymolysis for 10 h. Then, the temperature of enzymolysis slurry was adjusted to 35-38 °C, *lactobacillus* was added into substrate of enzymolysis at 1×10⁶ CFU/g, neutral protease was added into substrate of enzymolysis at 20 U/g , and acid protease was added into substrate of enzymolysis at 50 U/g, and then anaerobic fermentation was carried out for 24 h under heat preservation, thus obtaining the component A.

100 kg of soybean meal was de-impurized and crushed, 800 kg of water was added and mixed evenly, and then the temperature was raised to 80-85 °C, and the temperature was kept for 30 min for sterilization. Then the temperature of the sterilized soybean meal solution was adjusted to 55-60 °C, first the pH was adjusted to 9.0-9.5, then the alkaline protease was added into soybean meal at 1000 U/g, the temperature was kept for enzymolysis for 1 hours, and then the pH was adjusted to 7-7.5, neutral protease was added into soybean meal at 100 U/g, and mixed evenly to prepare enzymatic hydrolysis solution, and the temperature was kept for enzymolysis for 1h. The temperature of the enzymolysis slurry was adjusted to 35-38 °C, *Lactobacillus* was added into substrate of enzymolysis at 5×10⁶ CFU/g, acid protease was added into substrate of enzymolysis at 100 U/g, and then anaerobic fermentation was carried out for 30 h under heat preservation, thus obtaining the component B.

1600 kg of component A, 900 kg of component B and 500 kg of base material were mixed evenly to obtain bio-fermented liquid feed (complete bio-fermented liquid feed), wherein 500 kg of base material was obtained by evenly mixing the following raw materials: 8% puffed soybeans, 4% chocolate powder, 5% fish meal, 5% intestinal membrane protein powder, 4% yeast extract, 20% whey powder, 26% whole milk powder, 14% sucrose, 1.4% calcium hydrogen phosphate, 1% calcium formate, 5.6% fat powder and 6% premix feed.

The complete bio-fermented liquid feed was ground by colloid mill, then emulsified by emulsifying pump, finally homogenized by homogenizer to obtain a bio-fermented emulsion liquid feed with a particle size of 0.01-20 µm.

### Animal experiment:

100 weaned piglets aged 21 days were randomly divided into 2 treatment groups according to the principle of similar weight and the same sex, with 5 replicates in each treatment and 10 piglets in each replicate. Two kinds of experimental diets were fed separately: experimental feed A (control group, solid creep feed), experimental feed B (experimental group, bio-fermented emulsion liquid feed). During the experiment period, a dedicated person was arranged to in charge of the feeding, piglets were kept in a naturally ventilated environment and free to eat and drink, and the shed was kept clean and sanitary. During the experiment period, if the piglets were found sick, they were treated in time, and if could not recover within 3 days, they were eliminated. A 7-day experiment was carried out (21 days old to 28 days old) and the results were shown in Table 2.

**Table 2 Animal Experiment Results**

| Items | Control group (solid creep feed) | experimental group (emulsion bio-fermented liquid feed) |
|---|---|---|
| Average initial weight/kg | 7.09 | 7.09 |
| Average final weight/kg | 8.36 | 9.64 |
| Average daily gain(g/day•head) | 181.66 | 364.13 |
| Average daily feed | 333.03 | 435.78 |
| Intake(g/day•head) | | |
| Feed conversion ratio | 1.85 | 1.2 |
| Diarrhea rate/% | 7.48 | 3.7 |
| Survival rate/% | 96.00 | 100.00 |

| | | |
|---|---|---|
| Note: (1) when calculating the average daily feed intake, the weight of liquid material has been converted into the weight of solid material. | | |

The results show that the average daily gain, average daily feed intake and survival rate of piglets fed with bio-fermented emulsion liquid feed are significantly higher than those of the control group, while the diarrhea rate and feed conversion ratio of piglets fed with bio-fermented emulsion liquid feed were significantly lower than those of the control group.

## Claims

1. A preparation method of bio-fermented liquid feed, including the following steps:
1) mixing corn, broken rice, barley and wheat in a weight ratio of 1: (0-5): (0-5): (0-5) to obtain a first substrate of enzymolysis;
2) mixing the first substrate of enzymolysis obtained in step 1) with water, adding α-amylase according to the ratio of 10-500U per gram of the first substrate of enzymolysis, and raising the temperature to 70-100 °C for liquefaction enzymatic hydrolysis for 30-120min to obtain a first enzymolysis slurry A;
3) adjusting the temperature of the first enzymolysis slurry A obtained in step 2) to 40-80 °C, adding β-amylase according to the ratio of 100-2000 U per gram of the first substrate of enzymolysis, adding pullulanase according to the ratio of 0.1-100 ASPU per gram of the first substrate of enzymolysis, adding glucoamylase according to the ratio of 0-1000 U per gram of the first substrate of enzymolysis, add xylanase according to the ratio of 15-1000 U per gram of the first substrate of enzymolysis, adding β-glucanase according to the ratio of 5-1000 U per gram of the first substrate of enzymolysis, and enzymolyzing for 0-72 h to obtain a second enzymolysis slurry A;
4) adjusting the temperature of the second enzymolysis slurry A obtained in step 3) to 25-40 °C, adding *Lactobacillus* according to the ratio of 1×10⁵-1×10⁸ cfu per gram of the first substrate of enzymolysis, adding neutral protease according to the ratio of 1-1000 U per gram of the first substrate of enzymolysis, adding acid protease according to the ratio of 1-1000 U per gram of the first substrate of enzymolysis, and performing anaerobic fermentation for 10-72h to obtain a component A;
5) mixing and sterilizing the soybean meal and water, adjusting the temperature to 40-70 °C, adjusting the pH to 7-10, adding alkaline protease according to the ratio of 1-10000 U per gram of soybean meal, enzymolyzing for 0.5-6 h, then adjusting the pH to 6-8, adding neutral protease according to the ratio of 1-1000 U per gram of soybean meal, and enzymolyzing for 0.5-6 h to obtain a first enzymolysis slurry B;
6) adjusting the temperature of the first enzymolysis slurry B obtained in step 5) to 25-40 °C, adding *Lactobacillus* according to the ratio of 1×10⁵-1×10⁸ cfu per gram of soybean meal, and adding acid protease according to the ratio of 1-1000 U per gram of soybean meal, performing anaerobic fermentation for 10-72 h to obtain a component B;
7) mixing the component A obtained in step 4) and the component B obtained in step 6) with a base material to obtain a bio-fermented liquid feed; the base material comprises the following components by mass percentage: 0-20% quick-breaking soybeans or puffed soybeans, 1-10% fish meal, 0-10% intestinal membrane protein powder, 1-10% yeast extract, 0-10% chocolate powder, 1-50% whey powder, 1-50% whole milk powder, 0-10% glucose, 1-20% sucrose, 0.1-5% calcium hydrogen phosphate, 0.1-5% calcium formate, 0.1-10% fat powder and 2-10% premix feed;
wherein the step 1) and the step 5) are not limited in time sequence.

2. The preparation method according to claim 1, wherein the corn, broken rice, barley and wheat in step 1) and the soybean meal in step 5) are crushed before being mixed with water.

3. The preparation method according to claim 1 or 2, wherein the weight ratio for mixing the first substrate of enzymolysis in step 1) and water is 1: (1-10).

4. The preparation method according to any of claims 1 to 3, wherein the weight ratio for mixing the soybean meal and water in step 5) is 1: (1-20).

5. The preparation method according to any of claims 1 to 4, wherein in step 7), the weight ratio of component A, component B and base material is 100: (10-1000): (10-100).

6. A bio-fermented liquid feed prepared by the preparation method of any of claims 1 to 5.

7. A bio-fermented emulsion liquid feed based on the preparation method of any of claims 1 to 5 or the bio-fermented liquid feed of claim 6, wherein the preparation method of the bio-fermented emulsion liquid feed comprises the following steps:
grinding, emulsifying and homogenizing the bio-fermented liquid feed to obtain the bio-fermented emulsion liquid feed.

8. The bio-fermented emulsion liquid feed according to claim 6 or 7, wherein the particle size of the bio-fermented emulsion liquid feed is 0.01-1000 µm.

## Patentansprüche

1. Verfahren zur Herstellung eines biofermentierten Flüssigfutters, umfassend die folgenden Schritte:
1) Mischen von Mais, Bruchreis, Gerste und Weizen in einem Gewichtsverhältnis von 1:(0-5):(0-5):(0-5), um ein erstes Enzymolyse-Substrat zu erhalten;
2) Mischen des in Schritt 1) erhaltenen ersten Enzymolyse-Substrats mit Wasser, Zugabe von α-Amylase im Verhältnis von 10-500 U pro Gramm des ersten Enzymolyse-Substrats und Erhöhen der Temperatur auf 70-100 °C zur verflüssigenden enzymatischen Hydrolyse für 30-120 min, um eine erste Enzymolyse-Suspension A zu erhalten;
3) Einstellen der Temperatur der in Schritt 2) erhaltenen ersten Enzymolyse-Suspension A auf 40-80 °C, Zugabe von β-Amylase im Verhältnis von 100-2000 U pro Gramm des ersten Enzymolyse-Substrats, Zugabe von Pullulanase im Verhältnis von 0,1-100 ASPU pro Gramm des ersten Enzymolyse-Substrats, Zugabe von Glucoamylase im Verhältnis von 0-1000 U pro Gramm des ersten Enzymolyse-Substrats, Zugabe von Xylanase im Verhältnis von 15-1000 U pro Gramm des ersten Enzymolyse-Substrats, Zugabe von β-Glucanase im Verhältnis von 5-1000 U pro Gramm des ersten Enzymolyse-Substrats und Durchführen der Enzymolyse für 0-72 h, um eine zweite Enzymolyse-Suspension A zu erhalten;
4) Einstellen der Temperatur der in Schritt 3) erhaltenen zweiten Enzymolyse-Suspension A auf 25-40 °C, Zugabe von Lactobacillus im Verhältnis von 1 × 10^5-1 × 10^8 cfu pro Gramm des ersten Enzymolyse-Substrats, Zugabe von Neutralprotease im Verhältnis von 1-1000 U pro Gramm des ersten Enzymolyse-Substrats, Zugabe von Säureprotease im Verhältnis von 1-1000 U pro Gramm des ersten Enzymolyse-Substrats und Durchführen einer anaeroben Fermentation für 10-72 h, um eine Komponente A zu erhalten;
5) Mischen und Sterilisieren von Sojamehl und Wasser, Einstellen der Temperatur auf 40-70 °C, Einstellen des pH-Werts auf 7-10, Zugabe von alkalischer Protease im Verhältnis von 1-10000 U pro Gramm Sojamehl, Durchführen der Enzymolyse für 0,5-6 h, anschließendes Einstellen des pH-Werts auf 6-8, Zugabe von Neutralprotease im Verhältnis von 1-1000 U pro Gramm Sojamehl und Durchführen der Enzymolyse für 0,5-6 h, um eine erste Enzymolyse-Suspension B zu erhalten;
6) Einstellen der Temperatur der in Schritt 5) erhaltenen ersten Enzymolyse-Suspension B auf 25-40 °C, Zugabe von Lactobacillus im Verhältnis von 1 × 10^5-1 × 10^8 cfu pro Gramm Sojamehl und Zugabe von Säureprotease im Verhältnis von 1-1000 U pro Gramm Sojamehl, Durchführen einer anaeroben Fermentation für 10-72 h, um eine Komponente B zu erhalten;
7) Mischen der in Schritt 4) erhaltenen Komponente A und der in Schritt 6) erhaltenen Komponente B mit einem Basismaterial, um ein biofermentiertes Flüssigfutter zu erhalten; das Basismaterial umfasst die folgenden Komponenten in Massenprozent: 0-20 % schnell quellende Sojabohnen oder expandierte Sojabohnen, 1-10 % Fischmehl, 0-10 % Darmmembranproteinpulver, 1-10 % Hefeextrakt, 0-10 % Schokoladenpulver, 1-50 % Molkenpulver, 1-50 % Vollmilchpulver, 0-10 % Glucose, 1-20 % Saccharose, 0,1-5 % Calciumhydrogenphosphat, 0,1-5 % Calciumformiat, 0,1-10 % Fettpulver und 2-10 % Vormischfutter;
wobei Schritt 1) und Schritt 5) in ihrer zeitlichen Reihenfolge nicht beschränkt sind.

2. Verfahren nach Anspruch 1, wobei der Mais, der Bruchreis, die Gerste und der Weizen in Schritt 1) sowie das Sojamehl in Schritt 5) vor dem Mischen mit Wasser zerkleinert werden.

3. Verfahren nach Anspruch 1 oder 2, wobei das Gewichtsverhältnis beim Mischen des ersten Enzymolyse-Substrats in Schritt 1) mit Wasser 1:(1-10) beträgt.

4. Verfahren nach einem der Ansprüche 1 bis 3, wobei das Gewichtsverhältnis beim Mischen von Sojamehl und Wasser in Schritt 5) 1:(1-20) beträgt.

5. Verfahren nach einem der Ansprüche 1 bis 4, wobei in Schritt 7) das Gewichtsverhältnis von Komponente A, Komponente B und Basismaterial 100:(10-1000):(10-100) beträgt.

6. Biofermentiertes Flüssigfutter, hergestellt durch das Herstellungsverfahren nach einem der Ansprüche 1 bis 5.

7. Biofermentiertes Emulsions-Flüssigfutter auf der Grundlage des Herstellungsverfahrens nach einem der Ansprüche 1 bis 5 oder des biofermentierten Flüssigfutters nach Anspruch 6, wobei das Herstellungsverfahren des biofermentierten Emulsions-Flüssigfutters die folgenden Schritte umfasst:
Mahlen, Emulgieren und Homogenisieren des biofermentierten Flüssigfutters, um das biofermentierte Emulsions-Flüssigfutter zu erhalten.

8. Biofermentiertes Emulsions-Flüssigfutter nach Anspruch 6 oder 7, wobei die Partikelgröße des biofermentierten Emulsions-Flüssigfutters 0,01-1000 µm beträgt.

## Revendications

1. Procédé de préparation d'un aliment liquide bio-fermenté, comprenant les étapes suivantes :
1) mélanger du maïs, du riz brisé, de l'orge et du blé dans un rapport pondéral de 1:(0-5):(0-5):(0-5) afin d'obtenir un premier substrat d'enzymolyse ;
2) mélanger le premier substrat d'enzymolyse obtenu à l'étape 1) avec de l'eau, ajouter de l'α-amylase selon un rapport de 10-500 U par gramme du premier substrat d'enzymolyse, et élever la température à 70-100 °C pour effectuer une hydrolyse enzymatique de liquéfaction pendant 30-120 min afin d'obtenir une première bouillie d'enzymolyse A ;
3) ajuster la température de la première bouillie d'enzymolyse A obtenue à l'étape 2) à 40-80 °C, ajouter de la β-amylase selon un rapport de 100-2000 U par gramme du premier substrat d'enzymolyse, ajouter de la pullulanase selon un rapport de 0,1-100 ASPU par gramme du premier substrat d'enzymolyse, ajouter de la glucoamylase selon un rapport de 0-1000 U par gramme du premier substrat d'enzymolyse, ajouter de la xylanase selon un rapport de 15-1000 U par gramme du premier substrat d'enzymolyse, ajouter de la β-glucanase selon un rapport de 5-1000 U par gramme du premier substrat d'enzymolyse, et effectuer l'enzymolyse pendant 0-72 h afin d'obtenir une deuxième bouillie d'enzymolyse A ;
4) ajuster la température de la deuxième bouillie d'enzymolyse A obtenue à l'étape 3) à 25-40 °C, ajouter des Lactobacillus selon un rapport de 1×10^5-1×10^8 cfu par gramme du premier substrat d'enzymolyse, ajouter de la protéase neutre selon un rapport de 1-1000 U par gramme du premier substrat d'enzymolyse, ajouter de la protéase acide selon un rapport de 1-1000 U par gramme du premier substrat d'enzymolyse, et effectuer une fermentation anaérobie pendant 10-72 h afin d'obtenir un composant A ;
5) mélanger et stériliser de la farine de soja et de l'eau, ajuster la température à 40-70 °C, ajuster le pH à 7-10, ajouter de la protéase alcaline selon un rapport de 1-10000 U par gramme de farine de soja, effectuer l'enzymolyse pendant 0,5-6 h, puis ajuster le pH à 6-8, ajouter de la protéase neutre selon un rapport de 1-1000 U par gramme de farine de soja, et effectuer l'enzymolyse pendant 0,5-6 h afin d'obtenir une première bouillie d'enzymolyse B ;
6) ajuster la température de la première bouillie d'enzymolyse B obtenue à l'étape 5) à 25-40 °C, ajouter des Lactobacillus selon un rapport de 1×10^5-1×10^8 cfu par gramme de farine de soja, et ajouter de la protéase acide selon un rapport de 1-1000 U par gramme de farine de soja, effectuer une fermentation anaérobie pendant 10-72 h afin d'obtenir un composant B ;
7) mélanger le composant A obtenu à l'étape 4) et le composant B obtenu à l'étape 6) avec un matériau de base afin d'obtenir un aliment liquide bio-fermenté ; le matériau de base comprend les composants suivants en pourcentage massique : 0-20 % de graines de soja à désintégration rapide ou de graines de soja soufflées, 1-10 % de farine de poisson, 0-10 % de poudre de protéine de membrane intestinale, 1-10 % d'extrait de levure, 0-10 % de poudre de chocolat, 1-50 % de poudre de lactosérum, 1-50 % de poudre de lait entier, 0-10 % de glucose, 1-20 % de saccharose, 0,1-5 % d'hydrogénophosphate de calcium, 0,1-5 % de formiate de calcium, 0,1-10 % de poudre de matière grasse et 2-10 % d'aliment prémélangé ;
dans lequel l'étape 1) et l'étape 5) ne sont pas limitées quant à leur ordre chronologique.

2. Procédé de préparation selon la revendication 1, dans lequel le maïs, le riz brisé, l'orge et le blé de l'étape 1) ainsi que la farine de soja de l'étape 5) sont broyés avant d'être mélangés avec de l'eau.

3. Procédé de préparation selon la revendication 1 ou 2, dans lequel le rapport pondéral pour le mélange du premier substrat d'enzymolyse à l'étape 1) et de l'eau est de 1:(1-10).

4. Procédé de préparation selon l'une quelconque des revendications 1 à 3, dans lequel le rapport pondéral pour le mélange de la farine de soja et de l'eau à l'étape 5) est de 1:(1-20).

5. Procédé de préparation selon l'une quelconque des revendications 1 à 4, dans lequel, à l'étape 7), le rapport pondéral du composant A, du composant B et du matériau de base est de 100:(10-1000):(10-100).

6. Aliment liquide bio-fermenté préparé par le procédé de préparation selon l'une quelconque des revendications 1 à 5.

7. Aliment liquide en émulsion bio-fermenté basé sur le procédé de préparation selon l'une quelconque des revendications 1 à 5 ou sur l'aliment liquide bio-fermenté de la revendication 6, dans lequel le procédé de préparation de l'aliment liquide en émulsion bio-fermenté comprend les étapes suivantes :
broyer, émulsifier et homogénéiser l'aliment liquide bio-fermenté afin d'obtenir l'aliment liquide en émulsion bio-fermenté.

8. Aliment liquide en émulsion bio-fermenté selon la revendication 6 ou 7, dans lequel la taille des particules de l'aliment liquide en émulsion bio-fermenté est de 0,01-1000 µm.
